# EUROPEAN PATENT SPECIFICATION

(11) **EP 0 327 750 B1**
(45) Date of publication and mention of the grant of the patent: **26.05.1993**
(21) Application number: 88308034.3
(22) Date of filing: 31.08.1988
(51) Int. Cl.: G11B 5/105, G11B 5/60

(54) **Method of and apparatus for placing a magnetic workpiece in a slot of a non-magnetic support**
Methode und Gerät zum Setzen eines magnetischen Werkstücks in eine Spalte eines nichtmagnetischen Trägers
Méthode et appareil pour placer une pièce magnétique à usiner dans une fente d'un support non magnétique

(30) Priority: 11.02.1988 US 154819
(43) Date of publication of application: 16.08.1989
(73) Proprietor: SEAGATE TECHNOLOGY INTERNATIONAL, Georgetown, Grand Cayman Island (KY)
(72) Inventor: Katz, Marat Gregory, Golden Valley Minnesota 55427 (US); Gori, Gino Egidio, Eden Prairie Minnesota 55344 (US)
(74) Representative: Miller, Joseph

(56) References cited:
- US-A- 3 964 103
- US-A- 4 487 649
- US-A- 4 625 393

## Description

The invention relates to methods of and apparatus for placing magnetic workpieces in slots of non-magnetic workpieces.

The conventional way of placing a ferrite core into a slot of a pad of a ferrite head has been to grasp the ferrite core with a pair of tweezers and, with the aid of a micro-scope or magnifying glass, manually orientate the core and place it into the slot. Ferrite heads are primarily utilised in magnetic recording, especially disk drives.

The present invention seeks to provide a method of and apparatus for placing a magnetic workpiece into a slot of a non-magnetic workpiece by sliding the magnetic workpiece into the slot using a moving magnet.

According to one aspect of the present invention, there is provided a method of placing a magnetic workpiece in a slot of a non-magnetic workpiece characterised by comprising the steps of: mounting below a non-magnetic table a circular magnet with its centre slidable along a line; clamping the non-magnetic workpiece on the non-magnetic table with said slot exposed and its centre line aligned with said line and the centre of the magnet; placing said magnetic workpiece on the table adjacent the magnet; and sliding the magnet towards the slot thereby moving and aligning the magnetic workpiece along the centre line and moving it until it enters the slot.

The magnetic workpiece may be a ferrite core and the non-magnetic workpiece may be a pad of a ferrite head.

According to another aspect of the present invention, there is provided an apparatus for placing a magnetic workpiece (32) in a slot of a non-magnetic workpiece characterised by comprising: a non-magnetic table; a slider mounted below said table and slidable along a line; a circular magnet mounted on said slider with the centre of the magnet located on said line; and means for clamping the non-magnetic workpiece on said table, with the slot thereof exposed and its centre line aligned with said line along which said slider is sliding and the centre of the magnet, said circular magnet having a magnetic field sufficient to cause said magnetic workpiece to be moved along said centre line as the slider slides along said line, with the degree of motion along said line sufficient for said magnet to move said magnetic workpiece into the slot of the non-magnetic workpiece.

The invention is illustrated, merely by way of example, in the accompanying drawings, in which:-
Figure 1 is a perspective view of an apparatus according to the present invention;
Figure 2 is a detail of a ferrite core and a pad from Figure 1;
Figure 3 is a front plan view of the apparatus of Figure 1;
Figure 4 is a top plan view of the apparatus of Figure 1; and
Figure 5 is a side plan view of the apparatus of Figure 1.

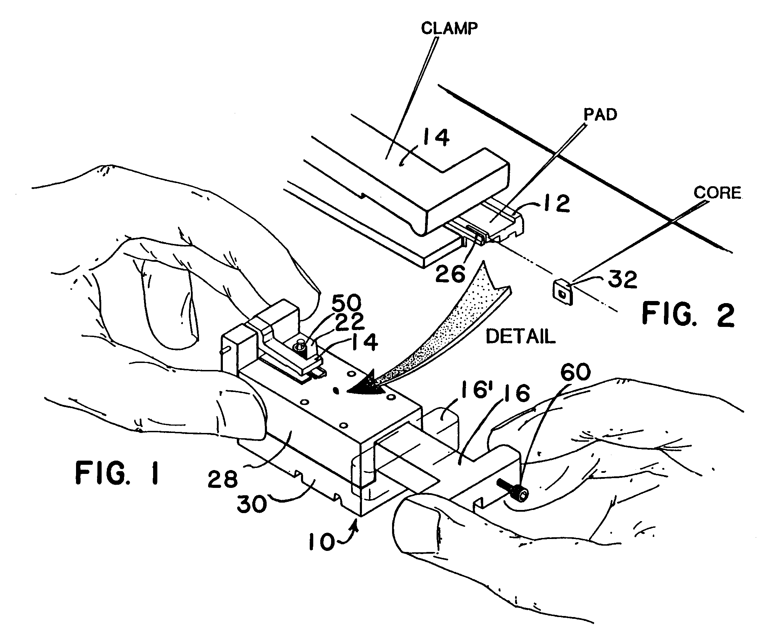

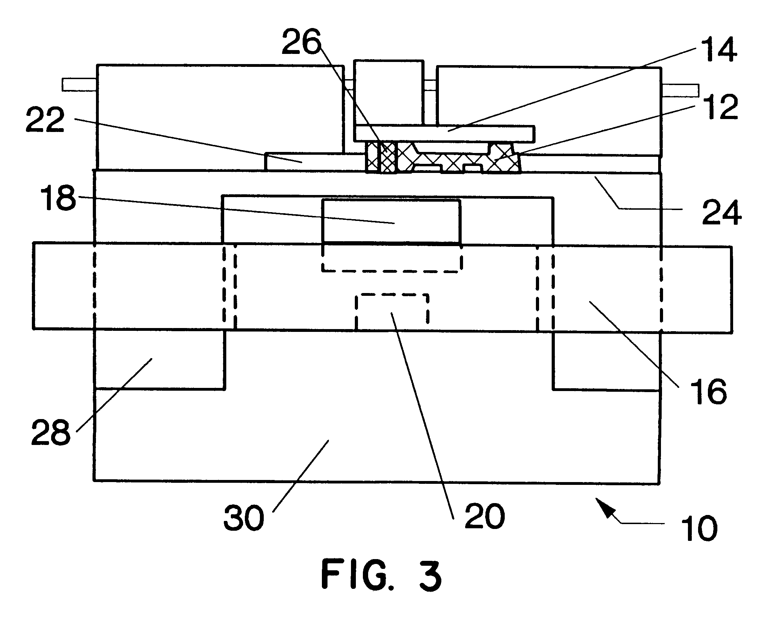

Figures 1 to 5 show an embodiment of apparatus 10 according to the present invention for positioning a magnetic core 32 into a slot 26 of a pad 12. The apparatus 10 comprises a magnet 18 located on a slider 16. As best shown in Figures 3 to 5, the slider 16 is located between an upper member 28 and a lower member 30 of the apparatus 10, and preferably has a retainer (not shown) for preventing the slider from being entirely withdrawn from the apparatus.

A nest 22 with a clamp 14 holds the pad 12 onto a table 24 with the slot 26 of the pad exposed and with its centre line aligned with the centre of the magnet 18.

All materials of the apparatus 10, except the magnet 18, are of non-magnetic material.

When the magnetic core 32 is placed on the table 24 near the magnet 18, the magnetic field of the circular magnet causes the core 32 to stand on edge as shown. When the slider 16 is pushed towards the pad 12, it moves the core 32 with it. The core follows the magnet aligned in the direction of motion. Because the flux fields of a circular magnet are radial, the core tends to align with the magnetic field along a radius. The moving motion gradually causes the core to move to align along the radius in the direction of motion. As the centre of the magnet is mounted along the centre line of the slot 26, it eventually moves the core into the slot. No other orientation or placement is required.

Also shown in Figure 1 are a set screw 50 which may be loosened to adjust the nest 22 so that the slot 26 of the pad 12 is in perfect alignment along the centre of the magnet 18. A stop screw 60 is provided to terminate the motion of the slider 16 at a position 16', after the core 32 is fully placed in the slot. The magnetic field of the magnet is useful to hold the core in place in the slot during subsequent operations wherein the core is bonded to the pad. The set and stop screws 50,60 are only shown in Figure 1.

In Figure 3, the magnet 18 is visible, mounted on the slider 16 just below the top of the table 24. The runner 20 is shown for guiding the motion of the slider 16.

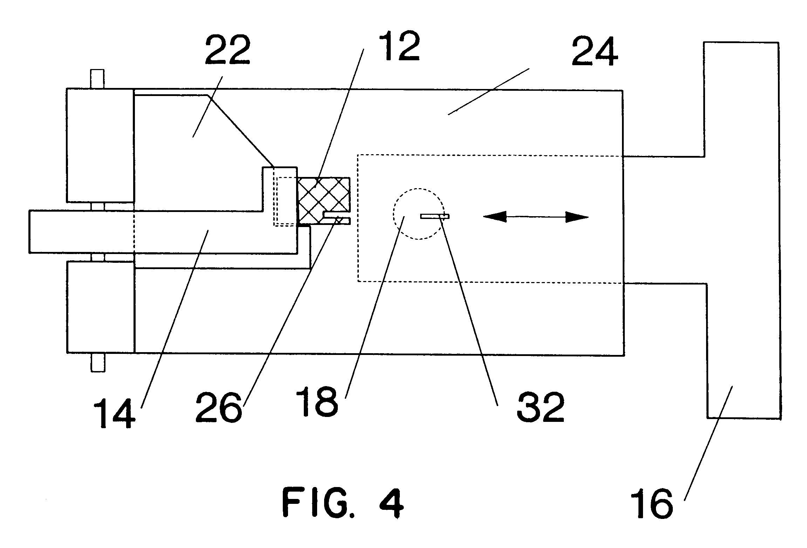

Figure 4 is a top plan view of the apparatus showing in phantom line the other portions of the slider 16 not heretofore visible, and the circular magnet 18. When moving the core 32 towards the slot 26, the core, as above discussed, follows the centre of the circular magnet 18 along a radial line of flux.

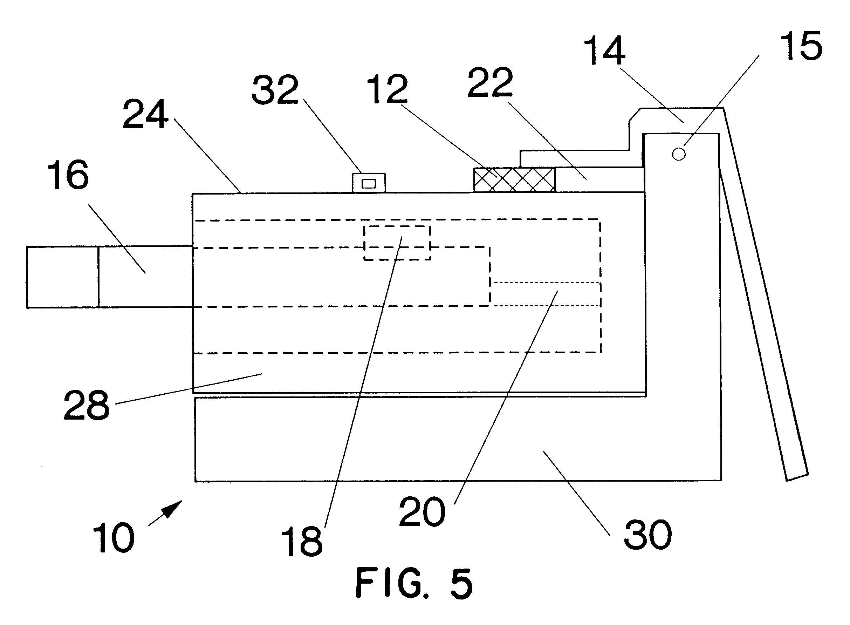

Figure 5 is a side plan view of the apparatus 10. This view shows the other elements previously discussed and as well the runner upon which the slider 16 runs and is guided. There is also shown a handle of the clamp 14, which pivots on a rod 15. The clamp shown is a simple lever. More elaborate clamps, for example, cams, etc., can be used. It is important to note from Figure 5 that the core 32 trails the centre of the circular magnet 18.

## Claims

1. A method of placing a magnetic workpiece (32) in a slot (26) of a non-magnetic workpiece (12) characterised by comprising the steps of: mounting below a non-magnetic table (24) a circular magnet (28) with its centre slidable along a line; clamping the non-magnetic workpiece (12) on the non-magnetic table (24) with said slot (26) exposed and its centre line aligned with said line and the centre of the magnet (18); placing said magnetic workpiece (32) on the table (24) adjacent the magnet (18); and sliding the magnet (18) towards the slot (26) thereby moving and aligning the magnetic workpiece (32) along the centre line and moving it until it enters the slot (26).

2. A method as claimed in claim 1 characterised in that the magnetic workpiece (32) is a ferrite core and the non-magnetic workpiece (12) is a pad of a ferrite head.

3. Apparatus for placing a magnetic workpiece (32) in a slot (26) of a non-magnetic workpiece (12) characterised by comprising: a non-magnetic table (24); a slider (16) mounted below said table (24) and slidable along a line; a circular magnet (18) mounted on said slider (16) with the centre of the magnet located on said line; and means (14) for clamping the non-magnetic workpiece (12) on said table, with the slot (26) thereof exposed and its centre line aligned with said line along which said slider (16) is sliding and the centre of the magnet (18), said circular magnet having a magnetic field sufficient to cause said magnetic workpiece (32) to be moved along said centre line as the slider (16) slides along said line, with the degree of motion along said line sufficient for said magnet to move said magnetic workpiece into the slot (26) of the non-magnetic workpiece.

4. Apparatus as claimed in claim 3 characterised in that said magnetic workpiece (32) is a ferrite core and said non-magnetic workpiece (12) is a pad of a ferrite head.

## Patentansprüche

1. Verfahren zum Einsetzen eines magnetischen Werkstückes (32) in einen Schlitz (26) eines nichtmagnetischen Werkstückes (12), gekennzeichnet durch die folgenden Schritte: Befestigung eines kreisförmigen Magneten (28) unter einem nichtmagnetischen Tisch (24), wobei der Mittelpunkt des Magneten entlang einer Linie verschiebbar ist, Festklemmen des nichtmagnetischen Werkstückes (12) auf dem nichtmagnetischen Tisch (24), wobei der Schlitz (26) freiliegt und seine Mittellinie mit der Linie und dem Mittelpunkt des Magneten (18) ausgerichtet ist, Anordnen des magnetischen Werkstückes (32) auf den Tisch (24) benachbart zum Magneten (18), und Verschieben des Magneten (18) in Richtung auf den Schlitz (26), wodurch das magnetische Werkstück (32) entlang der Mittellinie bewegt und ausgerichtet wird und solange bewegt wird, bis es in den Schlitz (26) eintritt.

2. Verfahren nach Anspruch 1,
dadurch gekennzeichnet, daß das magnetische Werkstück (32) ein Ferritkern ist, und daß das nichtmagnetische Werkstück (12) ein Halter eines Ferritkopfes ist.

3. Vorrichtung zum Einsetzen eines magnetischen Werkstückes (32) in einen Schlitz (26) eines nichtmagnetischen Werkstückes (12),
gekennzeichnet durch einen nichtmagnetischen Tisch (24), einen unterhalb des Tisches befestigten Schieber (16), der entlang einer Linie verschiebbar ist, einen kreisförmigen Magnet (18), der auf dem Schieber (16) befestigt ist, wobei der Mittelpunkt des Magneten auf der Linie liegt, und Einrichtungen (14) zum Festklemmen des nichtmagnetischen Werkstückes (12) auf dem Tisch, wobei der Schlitz des Werkstückes freiliegt und die Mittellinie des Schlitzes mit der Linie, entlang der sich der Schieber (16) verschiebt, und mit dem Mittelpunkt des Magneten (18) ausgerichtet ist, wobei der kreisförmige Magnet ein Magnetfeld aufweist, das ausreicht, um eine Bewegung des magnetischen Werkstückes (32) entlang der Mittellinie hervorzurufen, wenn sich der Schieber (16) entlang der Linie verschiebt, und wobei das Ausmaß der Bewegung entlang der Linie ausreichend ist, damit der Magnet das magnetische Werkstück in den Schlitz (26) des nichtmagnetischen Werkstückes bewegt.

4. Vorrichtung nach Anspruch 3,
dadurch gekennzeichnet, daß das magnetische Werkstück (32) ein Ferritkern ist, und daß das nichtmagnetische Werkstück (12) ein Halter eines Ferritkopfes ist.

## Revendications

1. Procédé pour placer une pièce magnétique (32) dans une fente (26) d'une pièce non magnétique (12), caractérisé en ce qu'il comprend les phases consistant à : monter sous une table non magnétique (24) un aimant circulaire (18) dont le centre peut coulisser selon une ligne ; brider la pièce non magnétique (12) sur la table non magnétique (24) dans une position où ladite fente (26) est exposée et où son axe est aligné sur ladite ligne et sur le centre de l'aimant (18) ; placer ladite pièce magnétique (32) sur la table (24) dans une position adjacente à l'aimant (18) ; et faire coulisser l'aimant (18) vers la fente (26), de manière à entraîner et à aligner la pièce magnétique (32) le long de l'axe et à l'entraîner jusqu'à ce qu'elle entre dans la fente (26).

2. Procédé selon la revendication 1, caractérisé en ce que la pièce magnétique (32) est un noyau de ferrite et la pièce non magnétique (12) est un bloc d'une tête de ferrite.

3. Appareil pour placer une pièce magnétique (32) dans une fente (26) d'une pièce non magnétique (12), caractérisé en ce qu'il comprend : une table non magnétique (24) ; un curseur (16) monté sous ladite table (24) et pouvant coulisser le long d'une ligne ; un aimant circulaire (18) monté sur ledit curseur (16) de façon que le centre de l'aimant soit placé sur ladite ligne ; et des moyens (14) servant à brider la pièce non magnétique (12) sur ladite table, dans une position où sa fente (26) est exposée et son axe est aligné sur ladite ligne le long de laquelle ledit curseur (16) coulisse, et sur le centre de l'aimant (18), ledit aimant ayant un champ magnétique suffisant pour entraîner ladite pièce magnétique (32) le long dudit axe lorsque le curseur (16) coulisse le long de ladite ligne, le degré de mouvement le long de ladite ligne étant suffisant pour que l'aimant fasse pénétrer ladite pièce magnétique dans la fente (26) de la pièce non magnétique.

4. Appareil selon la revendication 3, caractérisé en ce que ladite pièce magnétique (32) est un noyau de ferrite et ladite pièce non magnétique (12) est un bloc d'une tête de ferrite.
